# EUROPÄISCHE PATENTANMELDUNG

(11) **EP 4 040 666 A1**
(43) Veröffentlichungstag der Anmeldung: **10.08.2022**
(21) Anmeldenummer: 21155730.1
(22) Anmeldetag: 08.02.2021
(51) Int. Cl.: H02P 3/18, H02P 27/08, H02P 29/024, H02P 29/028, B24B 23/00

(54) **VERFAHREN ZUM ABBREMSEN EINES ROTIERENDEN WERKZEUGS EINER ELEKTRO-WERKZEUGMASCHINE UND ELEKTRO-WERKZEUGMASCHINE**

(71) Anmelder: Hilti Aktiengesellschaft, 9494 Schaan (LI)
(72) Erfinder: Lacher, Michael, 86830 Schwabmünchen (DE); Ouni, Manel, 86199 Augsburg (DE); Mahler, Thomas, 18299 Laage (DE)
(74) Vertreter: Hilti Aktiengesellschaft Corporate Intellectual Property

(57) **Zusammenfassung**

Die vorliegende Erfindung betrifft ein Verfahren zum Abbremsen eines rotierenden Werkzeugs einer Elektro-Werkzeugmaschine, wobei die Elektro-Werkzeugmaschine eine Maschinen-Elektronik und einen Motor umfasst. Es werden Bremsverfahren vorgestellt, bei denen der Abbremsvorgang Sub-Sequenzen zum Rückspeisen der freiwerdenden Bremsenergie und zum Antreiben des Elektromotors umfasst. Die vorgeschlagenen Bremsverfahren sind durch einen Wechsel zwischen den Sub-Sequenzen gekennzeichnet, wobei der Wechsel entweder in Abhängigkeit von einer Spannung in einem Zwischenkreis der Maschinen-Elektronik initiiert werden kann oder nach Ablauf von zuvor festgelegten Zeitspannen für die einzelnen Sub-Sequenzen. In einem weiteren Aspekt betrifft die Erfindung eine Elektro-Werkzeugmaschine zur Durchführung eines der vorgeschlagenen Bremsverfahren. Bei der vorgeschlagenen Elektro-Werkzeugmaschine kann es sich insbesondere um ein Elektro-Schleifgerät handeln.

## Beschreibung

Die vorliegende Erfindung betrifft ein Verfahren zum Abbremsen eines rotierenden Werkzeugs einer Elektro-Werkzeugmaschine, wobei die Elektro-Werkzeugmaschine eine Maschinen-Elektronik und einen Motor umfasst. Es werden Bremsverfahren vorgestellt, bei denen der Abbremsvorgang Sub-Sequenzen zum Rückspeisen der freiwerdenden Bremsenergie und zum Antreiben des Elektromotors umfasst. Die vorgeschlagenen Bremsverfahren sind durch einen Wechsel zwischen den Sub-Sequenzen gekennzeichnet, wobei der Wechsel entweder in Abhängigkeit von einer Spannung in einem Zwischenkreis der Maschinen-Elektronik initiiert werden kann oder nach Ablauf von zuvor festgelegten Zeitspannen für die einzelnen Sub-Sequenzen. In einem weiteren Aspekt betrifft die Erfindung eine Elektro-Werkzeugmaschine zur Durchführung eines der vorgeschlagenen Bremsverfahren. Bei der vorgeschlagenen Elektro-Werkzeugmaschine kann es sich insbesondere um ein Elektro-Schleifgerät handeln.

### Hintergrund der Erfindung:

Im Bereich der Elektro-Werkzeugmaschinen sind beispielsweise Schleifgeräte mit einer Schleifscheibe als rotierendem Werkzeug bekannt. Nach dem Ausschalten eines Antriebs einer solchen Elektro-Werkzeugmaschine ist in der Drehbewegung der Schleifscheibe, sowie grundsätzlich in den rotierenden Komponenten des Geräts, kinetische Energie gespeichert. Diese kinetische Energie hängt von der Masse und der Drehzahl der jeweiligen Komponente ab und sorgt für eine unerwünschte Weiterbewegung der rotierenden Komponenten der Elektro-Werkzeugmaschine. Eine Bremswirkung auf diese rotierenden Komponenten der Elektro-Werkzeugmaschine wird durch die mechanische Reibung der Komponenten in ihren Kontaktbereichen mit der Maschine bewirkt. Durch diese Bremswirkung verlangsamt sich die Drehbewegung der rotierenden Komponenten der Elektro-Werkzeugmaschine und es kommt schließlich zu einem Stillstand der Komponenten. Wenn die Drehzahl einer solchen rotierenden Komponente der Elektro-Werkzeugmaschine gegenüber der Zeit aufgetragen wird, ergibt sich eine sog. Auslaufkurve, die das Langsamer-Werden der rotierenden Komponenten der Elektro-Werkzeugmaschine darstellt.

Im Stand der Technik sind verschiedene Verfahren bekannt, um eine rotierende Komponente einer Elektro-Werkzeugmaschine abzubremsen. Beispielsweise wird das sogenannte Kurzschlußbremsen am Motor praktiziert, bei dem die Phasen des Elektromotors der Elektro-Werkzeugmaschine kurzgeschlossen werden. Der elektrische und magnetische Widerstand in dem entsprechenden Schalt- oder Wirkkreis wirkt in diesem Fall ähnlich wie die mechanische Reibung und führt zu einem Abbremsen der Schleifscheibe. Nachteilig an dem sog. Kurzschlußbremsen ist allerdings, dass der Bremsvorgang nicht steuerbar ist. Dies führt dazu, dass weder die Bremzeit, noch das Nutzerempfinden beeinflusst werden können. Darüber hinaus wird durch das Kurzschließen der Motorphasen ein Bremsstrom erzeugt, der in irgendeiner Weise behandelt bzw. abgeführt werden muss.

Ferner ist im Stand der Technik die Bremsbestromung des Motors bekannt. Dadurch kann ein auftretender Bremsstrom geregelt werden. Allerdings kann bei der Bremsbestromung des Motors ein Energiefluss in den Zwischenkreis der Elektronik der Elektro-Werkzeugmaschine («Maschinen-Elektronik») auftreten. Der Energiefluss kann zu einem Anstieg der Spannung in dem Zwischenkreis führen, wobei dieser Anstieg bei Überschreiten gewisser Grenzwerte schädlich für etwaige Elektrolyt-Kondensatoren («ELKOs») sein kann, die ggf. in der Maschinen-Elektronik verbaut sind. Allerdings kann ein solcher unerwünschter Spannungsanstieg im Zwischenkreis der Maschinen-Elektronik durch die Vorsehung von Brems-Choppern vermieden werden. Dies führt allerdings zu einem erhöhten Bedarf an Bauraum innerhalb der Elektro-Werkzeugmaschine und zu erhöhten Herstellungskosten.

Die Aufgabe, die der vorliegenden Erfindung zugrunde liegt, besteht darin, die vorstehend beschriebenen Mängel und Nachteile des Standes der Technik zu überwinden und Bremsverfahren für Elektro-Werkzeugmaschinen anzugeben, mit denen die rotierenden Komponenten der Maschine, insbesondere ihr Werkzeug, schnell abgebremst werden kann. Dabei sollen die verbesserten Bremsverfahren - vorzugsweise durch möglichst wenige und gut einstellbare Parameter- steuerbar sein. Die Fachwelt würde es begrüßen, wenn eine Überspannung im Zwischenkreis der Maschinen-Elektronik sicher und wirksam vermieden werden könnte, ohne dass die entsprechenden Maschinen ein höheres Volumen aufweisen und dadurch unhandlicher werden. Darüber hinaus soll von einer Vorsehung zusätzlicher Bauteile - aus Kosten- und Platzgründen - abgesehen werden. Mit der Erfindung soll auch eine Elektro-Werkzeugmaschine angegeben werden, mit der die vorzuschlagenden Bremsverfahren durchgeführt werden können.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist ein Verfahren zum Abbremsen eines rotierenden Werkzeugs einer Elektro-Werkzeugmaschine vorgesehen, wobei die Elektro-Werkzeugmaschine eine Maschinen-Elektronik und einen Motor umfasst. Das vorgeschlagene Verfahren ist dadurch gekennzeichnet, dass der Abbremsvorgang eine erste Sub-Sequenz und eine zweite Sub-Sequenz umfasst, wobei während des Abbremsvorgangs zwischen den Sub-Sequenzen gewechselt wird und wobei Umschaltpunkte zwischen den Sub-Sequenzen in Abhängigkeit von einer Spannung in einem Zwischenkreis der Maschinen-Elektronik ausgewählt werden.

Es ist im Sinne der Erfindung bevorzugt, dass die erste Sub-Sequenz als «Rückspeisen» bezeichnet wird. Demensprechend ist es in der ersten Sub-Sequenz des Abbremsvorgangs bevorzugt, dass freiwerdende Bremsenergie in den Zwischenkreis der Maschinen-Elektronik zurückgespeist wird, so dass die Energie für einen weiteren Betrieb der Elektro-Werkzeugmaschine zur Verfügung steht bzw. genutzt werden kann.

Es ist im Sinne der Erfindung bevorzugt, dass die Werkzeugmaschine einen Schalteranordnung zur Leistungsansteuerung des Motors aufweist. Vorzugsweise kann die Schalteranordnung einen Motorinverter umfassen. In der ersten Sub-Sequenz des Abbremsvorgangs ist es im Sinne der Erfindung bevorzugt, dass nur die minus- oder masseseitigen Schalter (Low-Side-Schalter) des Motorinverters der Elektro-Werkzeugmaschine angesteuert werden. Die Schaltelemente des Motorinverters vorzugsweise verfügen über eine integrierte Diode in Rückwärtsrichtung, um einen entsprechenden Stromfluss zu erlauben. Sollte z.B. ein Metall-Oxid-Halbleiter-Feldeffekttransistor (MOS-FET) als Schaltelement verwendet werden, kann dieser zur Verbesserung des Stromflusses in Rückwärtsrichtung aktiviert werden. Es ist im Sinne der Erfindung bevorzugt, dass der Motorinverter als B6-Brücke oder als Schaltelement zum Ansteuern des Motors ausgebildet ist. Es ist im Sinne der Erfindung insbesondere bevorzugt, dass es sich bei der Ansteuerung um eine Puls Width Modulation-Ansteuerung (PWM) handelt. Das Schaltelement kann ferner als Bipolartransistor mit isolierter Gate-Elektrode (IGBT) ausgebildet sein.

Dies kann insbesondere entsprechend einer Kommutierungs-Tabelle des Motors der Elektro-Werkzeugmaschine erfolgen. Die alleinige Aktivierung der Low-Side-Schalter des Motorinverters bedeutet im Sinne der Erfindung bevorzugt, dass in der Sub-Sequenz «Rückspeisen» insbesondere die die minus- oder masseseitigen Schalter der Schalteranordnung aktiv sind. Diese werden zur besseren Verständlichkeit im Sinne der Erfindung als Low-Side-Halbleiter oder Low-Side-Schalter bezeichnet. Es ist im Sinne der Erfindung besonders bevorzugt, dass in der ersten Sub-Sequenz des Abbremsvorgangs funktional nur Low-Side-Schalter des Motorinverters der Elektro-Werkzeugmaschine aktiviert sind.

Vorzugsweise kann in der ersten Sub-Sequenz des Abbremsvorgangs ein Lastzyklus in Abhängigkeit von einer Geschwindigkeit des rotierenden Werkzeugs der Elektro-Werkzeugmaschine und/oder in Abhängigkeit von einem Bremsstroms des Motors der Elektro-Werkzeugmaschine ermittelt werden. Die treibende Größe für den Bremsstrom ist die elektromotorische Kraft des Elektromotors der Werkzeugmaschine. Die elektromotorische Kraft des Elektromotors hängt vorzugsweise von der Drehzahl des Motors ab. Es ist im Sinne der Erfindung bevorzugt, eine flexible PWM-Steuerung zu verwenden, um ein kontrolliertes Brems- bzw. Geräteverhalten zu erhalten.

Es ist im Sinne der Erfindung bevorzugt, dass die zweite Sub-Sequenz als «Antreiben» bezeichnet wird. Demensprechend ist es im Sinne der Erfindung bevorzugt, dass in der zweiten Sub-Sequenz des Abbremsvorgangs der Motor der Elektro-Werkzeugmaschine angetrieben wird. Vorzugsweise fließt in der Sub-Sequenz «Antreiben» die Energie aus dem Zwischenkreis zurück in den Motor. Es ist im Sinne der Erfindung insbesondere bevorzugt, dass der Motor als bürstenloser Motor ausgebildet ist.

Vorzugsweise sind in der zweiten Sub-Sequenz des Abbremsvorgangs alle Schaltelemente der Schalteranordnung der Elektro-Werkzeugmaschine aktiviert. Bei den Schaltelementen kann es sich insbesondere um die High-Side-Schalter und die Low-Side-Schalter der Schalteranordnung handeln. Es ist im Sinne der Erfindung insbesondere bevorzugt, dass die High-Side-Schalter und die Low-Side-Schalter Komponenten des Motorinverters der Elektro-Werkzeugmaschine sind. Beispielsweise können somit in der zweiten Sub-Sequenz des Abbremsvorgangs alle Schaltelemente des Motorinverters der Elektro-Werkzeugmaschine aktiviert sein. Das bedeutet im Sinne der Erfindung bevorzugt, dass in der Sub-Sequenz «Antreiben» sowohl die Low-Side-Schalter, als auch die High-Side-Schalter des Motorinverters der Werkzeugmaschine aktiviert sind. Es ist im Sinne der Erfindung insbesondere bevorzugt, dass die High-Side-Halbleiter und die Low-Side-Halbleiter in der Sub-Sequenz «Antreiben» komplementär zueinander geschaltet werden. Darüber hinaus ist es im Sinne der Erfindung bevorzugt, dass in der Sub-Sequenz «Antreiben» ein Umwandlungsbetrieb in Blockkommutierung erfolgt, während ein Umwandlungsbetrieb in Sinuskommutierung ebenfalls möglich ist. Es ist im Sinne der Erfindung bevorzugt, dass es sich bei einem High-Side-Schalter des Motorinverters um einen plusseitigen Schalter der Schalteranordnung handelt.

Es ist im Kontext der Erfindung vorgesehen, dass die Umschaltpunkte zwischen den Sub-Sequenzen in Abhängigkeit von einer Spannung in einem Zwischenkreis der Maschinen-Elektronik ausgewählt werden. Vorzugsweise umfasst der Zwischenkreis einen Gleichstrom-Zwischenkreis (DC-Link) oder wird von einem solchen gebildet. Es ist im Sinne der Erfindung bevorzugt, dass die Umschaltpunkte durch die eine maximale Trigger-Spannung U_DC_max und eine minimale Trigger-Spannung U_DC_min festgelegt werden.

Das vorgeschlagene Verfahren zum Abbremsen eines rotierenden Werkzeugs einer Elektro-Werkzeugmaschine kann in einer anderen Formulierung durch folgende Verfahrensschritte beschrieben werden:
a) Start eines Abbremsvorgangs für das rotierende Werkzeug der Elektro-Werkmaschine in einer ersten Sub-Sequenz des Abbremsvorgangs,
b) Ermittlung einer Spannung in einem Zwischenkreis der Maschinen-Elektronik,
c) Wechsel in eine zweite Sub-Sequenz, wenn die Spannung in dem Zwischenkreis der Maschinen-Elektronik größer als eine maximale Trigger-Spannung U_DC_max ist,
d) Fortführung des Abbremsvorgangs in der zweiten Sub-Sequenz,
e) Wechsel in die erste Sub-Sequenz, wenn die Spannung in dem Zwischenkreis der Maschinen-Elektronik kleiner als eine minimale Trigger-Spannung U_DC_min ist.

Vorzugsweise beginnt das vorgeschlagene Abbremsverfahren mit der ersten Sub-Sequenz, in der bevorzugt ein Rückspeisen der freiwerdenden Bremsenergie in den Zwischenkreis der Maschinen-Elektronik erfolgt. Während des Rückspeisens wird die Spannung in dem Zwischenkreis der Elektronik der Elektro-Werkzeugmaschine ermittelt. Ein Wechsel von der ersten Sub-Sequenz in die zweite Sub-Sequenz, d.h. zum Antreiben, erfolgt insbesondere dann, wenn die zuvor ermittelte Spannung im Zwischenkreis der Maschinen-Elektronik größer ist als eine maximale Trigger-Spannung U_DC_max. Diese repräsentiert vorzugsweise den ersten Umschaltpunkt zwischen der ersten und der zweiten Sub-Sequenz des vorgeschlagenen Abbremsverfahrens. Der Abbremsvorgangs wird dann in der zweiten Sub-Sequenz fortgeführt, bis die Spannung im Zwischenkreis der Maschinen-Elektronik kleiner ist als eine minimale Trigger-Spannung U_DC_min, die vorzugsweise den zweiten Umschaltpunkt zwischen der zweiten und der ersten Sub-Sequenz des vorgeschlagenen Abbremsverfahrens repräsentiert. Wenn die im Zwischenkreis der Maschinen-Elektronik ermittelte Spannung kleiner ist als die minimale Trigger-Spannung U_DC_min, erfolgt ein Rück-Wechsel von der zweiten Sub-Sequenz in die erste Sub-Sequenz. Dieser Wechsel zwischen den Sub-Sequenzen in Abhängigkeit von der Spannung im Zwischenkreis der Maschinen-Elektronik kann so oft wiederholt werden, bis das rotierende Werkzeug der Elektro-Werkmaschine zum Stillstand gekommen ist.

Tests haben gezeigt, dass eine schädliche Überspannung im Zwischenkreis mit dem vorgeschlagenen Verfahren wirksam vermieden werden kann. Vorteilhafterweise ist der Bremsablauf im Kontext des vorgeschlagenen Bremsverfahrens unkompliziert und mit wenigen Parametern justier- und veränderbar. Darüber hinaus müssen keine zusätzlichen Materialkosten für zusätzliche Bauteile aufgewendet werden. Dadurch kann auch der Bauraum innerhalb der Elektro-Werkzeugmaschine klein gehalten und ein kompaktes, gut handzuhabendes Gerät bereitgestellt werden. In einer zweiten Implementierung betrifft die Erfindung ein alternatives Verfahren zum Abbremsen eines rotierenden Werkzeugs einer Elektro-Werkzeugmaschine, wobei die Elektro-Werk-zeugmaschine eine Maschinen-Elektronik und einen Motor umfasst. Dieses alternative Abbremsverfahren ist dadurch gekennzeichnet, dass der Abbremsvorgang eine erste Sub-Sequenz und eine zweite Sub-Sequenz umfasst, wobei der ersten Sub-Sequenz eine erste Zeitspanne t_brake und der zweiten Sub-Sequenz eine zweite Zeitspanne t_drive zugeordnet wird, wobei nach deren Ablauf zwischen den Sub-Sequenzen gewechselt wird, wodurch Umschaltpunkte zwischen den Sub-Sequenzen festgelegt werden, wobei Maschinen-Stromwerte I_brake und I_drive in Abhängigkeit von einer Spannung in einem Zwischenkreis der Maschinen-Elektronik bestimmt werden.

Die für das zuerst vorgestellte Bremsverfahren eingeführten Begriffe, Definitionen und technischen Vorteile gelten für das alternative Bremsverfahren analog. Es ist im Sinne der Erfindung bevorzugt, dass bei dem alternativen Bremsverfahren ein Wechsel zwischen den Sub-Sequenzen des Abbremsvorgangs gemäß einer festen Zeitaufteilung erfolgt. Das bedeutet im Sinne der Erfindung bevorzugt, dass beispielsweise eine feste Zeitspanne t_brake für die erste Sub-Sequenz und eine feste Zeitspanne t_drive für die zweite Sub-Sequenz festgelegt wird. Mit anderen Worten kann die Sub-Sequenz "Rückspeisen" beispielsweise eine Zeitspanne t_brake dauern, während die Sub-Sequenz "Antreiben" eine Zeitspanne t_drive dauert.

Es ist im Sinne der Erfindung bevorzugt, dass die Zeitspanne t_brake größer ist als die Zeitspanne t_drive. Dadurch kann ein besonders schnelles Abbremsen des rotierenden Werkzeugs der Elektro-Werkzeugmaschine erreicht werden.

Das vorgeschlagene alternative Verfahren zum Abbremsen eines rotierenden Werkzeugs einer Elektro-Werkzeugmaschine kann in einer anderen Formulierung durch folgende Verfahrensschritte beschrieben werden:
a) Start eines Abbremsvorgangs für das rotierende Werkzeug der Elektro-Werkmaschine in einer ersten Sub-Sequenz des Abbremsvorgangs, wobei der ersten Sub-Sequenz eine erste Zeitspanne t_brake zugeordnet wird, wobei während des Abbremsvorgangs Maschinen-Stromwerte I_brake in Abhängigkeit von einer Spannung in einem Zwischenkreis der Maschinen-Elektronik bestimmt werden,
b) Wechsel in eine zweite Sub-Sequenz nach Ablauf der ersten Zeitspanne t_brake,
c) Fortführung des Abbremsvorgangs in der zweiten Sub-Sequenz für eine zweite Zeitspanne t_drive, wobei während der zweiten Sub-Sequenz die Maschinen-Stromwerte I_drive in Abhängigkeit von einer Spannung in einem Zwischenkreis der Maschinen-Elektronik bestimmt werden,
d) Wechsel in die erste Sub-Sequenz nach Ablauf der ersten Zeitspanne t_drive.

Es ist im Sinne der Erfindung bevorzugt, dass in dieser Ausführungsform die Spannung im Zwischenkreis der Maschinen-Elektronik einen bauteilzulässigen Grenzwert, dessen Überschreitung schädlich sein kann für einzelne Bauteile, nicht übersteigt. Um dies zu erreichen, ist es bevorzugt, dass die Maschinen-Stromwerte I_brake und I_drive in den entsprechenden Sub-Sequenzen entsprechend der Zwischenkreisspannung geregelt werden. Mit anderen Worten ist es im Sinne der Erfindung bevorzugt, dass während des Abbremsvorgangs die Maschinen-Stromwerte I_brake und I_drive in Abhängigkeit von der Spannung im Zwischenkreis der Maschinen-Elektronik geregelt werden.

Der Nutzer der Elektro-Werkzeugmaschine nimmt den Wechsel zwischen den Sub-Sequenzen in dieser Ausführungsform der Erfindung nicht oder kaum wahr. Dies ist insbesondere auf die vergleichsweise kurzen Zeitspannen t_brake und t_drive zurückzuführen, die in der Regel kürzer sind als die Zeitspannen zwischen den Umschaltpunkten in der zuerst vorgestellten Ausführungsform der Erfindung, bei der die Wechsel zwischen den Sub-Sequenzen in Abhängigkeit von der Zwischenkreisspannung initiiert werden. Durch die vergleichsweise kurzen Zeitspannen, in denen die Elektro-Werkzeugmaschine in den einzelnen Sub-Sequenzen verbleibt, werden die Wechsel vom Nutzer nicht oder kaum wahrgenommen, was zu einer saften Wahrnehmung des Bremsvorgangs für den Nutzer der vorgeschlagenen Elektro-Werkzeugmaschine führt.

Das vorgeschlagene Bremsverfahren gemäß dieser alternativen Ausgestaltung der Erfindung ist gegenüber dem Stand der Technik mit dem Vorteil verbunden, dass keine zusätzlichen Materialkosten für zusätzliche Bauteile anfallen. Außerdem kann eine kompakte und einfach zu bedienende Maschine bereitgestellt werden. Darüber hinaus wird eine zu hohe Spannung im Zwischenkreis der Maschinen-Elektronik sicher und wirksam verhindert und es kann mit der Erfindung ein besonders weicher Bremsverlauf bereitgestellt werden. Durch die Limitierung der maximal fließenden Ströme wird vorteilhafterweise auch ein besonders sanfter Übergang in den Stillstand des rotierenden Werkzeugs der Elektro-Werkzeugmaschine ermöglicht.

Es ist im Sinne der Erfindung bevorzugt, dass das rotierende Werkzeug der Elektro-Werkzeugmaschine durch eine Regelung und/oder Limitierung der Maschinen-Stromwerte I_brake und I_drive abgebremst wird. Durch die Limitierung der maximal fließenden Ströme wird vorteilhafterweise ein besonders sanfter Übergang in den Stillstand des rotierenden Werkzeugs der Elektro-Werkzeugmaschine ermöglicht.

Auch in der alternativen Ausführungsform der Erfindung ist es bevorzugt, dass in der ersten Sub-Sequenz des Abbremsvorgangs freiwerdende Bremsenergie in den Zwischenkreis zurückgespeist wird bzw. dass in der ersten Sub-Sequenz des Abbremsvorgangs nur Low-Side-Schalter des Motorinverters der Elektro-Werkzeugmaschine aktiviert sind. Darüber hinaus kann in der ersten Sub-Sequenz des Abbremsvorgangs ein Lastzyklus in Abhängigkeit von einer Geschwindigkeit des rotierenden Werkzeugs der Elektro-Werkzeugmaschine und/oder in Abhängigkeit von einem Bremsstroms des Motors der Elektro-Werkzeugmaschine ermittelt werden. Es ist in der alternativen Ausführungsform der Erfindung auch bevorzugt, dass in der zweiten Sub-Sequenz des Abbremsvorgangs des Motors der Elektro-Werkzeugmaschine angetrieben wird bzw. dass in der zweiten Sub-Sequenz des Abbremsvorgangs im Wesentlichen alle Schalter des Motorinverters der Elektro-Werkzeugmaschine aktiviert sind.

In einem weiteren Aspekt betrifft die Erfindung eine Elektro-Werkzeugmaschine zur Durchführung eines der vorgeschlagenen Bremsverfahren. Die für die Bremsverfahren eingeführten Begriffe, Definitionen und technischen Vorteile gelten vorzugsweise für die Elektro-Werkzeugmaschine analog. Es ist im Sinne der Erfindung bevorzugt, dass es sich bei der Elektro-Werkzeugmaschine um ein Elektro-Schleifgerät handelt.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert. Es zeigen:
- Fig. 1: schematische Darstellung einer bevorzugten Ausgestaltung des vorgeschlagenen Bremsverfahrens
- Fig. 2: schematische Darstellung einer bevorzugten Ausgestaltung des alternativen vorgeschlagenen Bremsverfahrens
- Fig. 3: schematische Darstellung eines möglichen Zeitablaufs des alternativen vorgeschlagenen Bremsverfahrens

### Ausführungsbeispiele und Figurenbeschreibung:

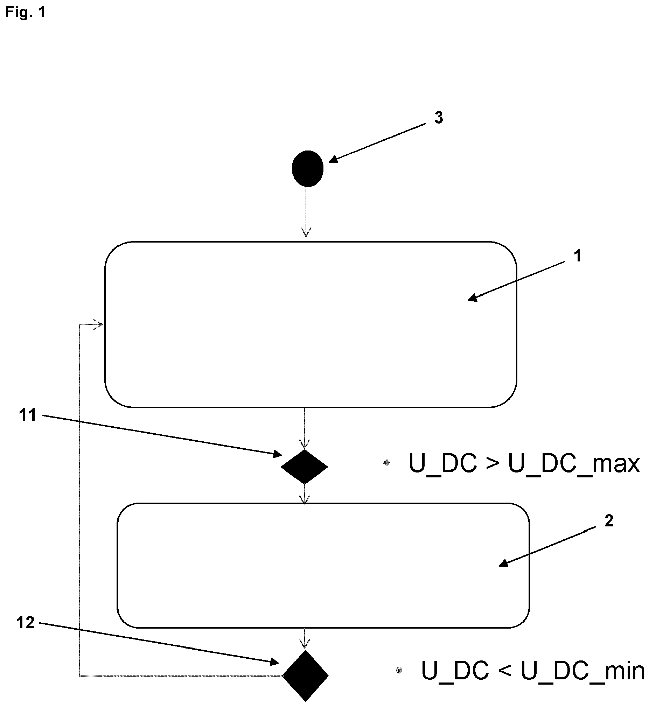

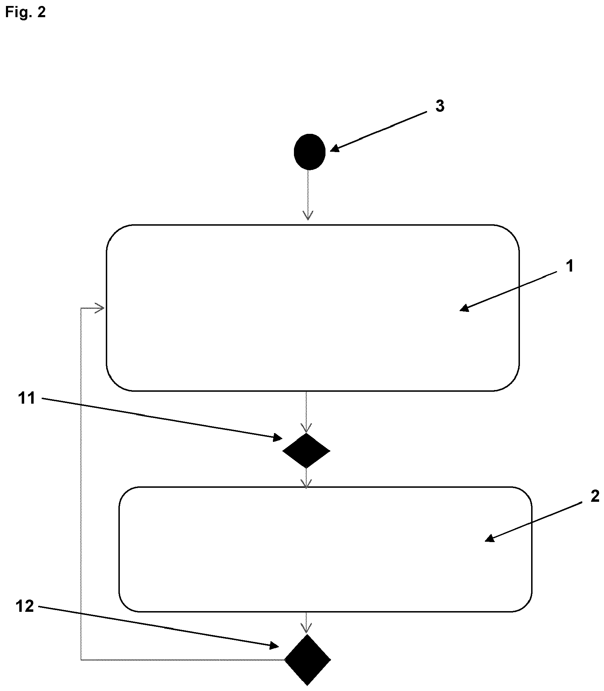

Figur 1 zeigt eine schematische Darstellung einer bevorzugten Ausgestaltung des vorgeschlagenen Bremsverfahrens. Das vorgeschlagene Verfahren zum Abbremsen eines rotierenden Werkzeugs (nicht dargestellt) einer Elektro-Werkzeugmaschine (nicht dargestellt) umfasst eine erste Sub-Sequenz 1 und eine zweite Sub-Sequenz 2, wobei das vorgeschlagene Bremsverfahren vorzugsweise mit einer ersten Sub-Sequenz 1 beginnt. Der Start 3 des Abbremsverfahrens wird durch den runden Punkt oben in den Fig. 1 und 2 dargestellt. Die erste Sub-Sequenz 1 wird vorzugsweise als "Rückspeisen" bezeichnet, während die zweite Sub-Sequenz 2 als "Antreiben" bezeichnet wird.

Ein Wechsel 11, 12 zwischen den Sub-Sequenzen 1, 2 erfolgt in Abhängigkeit von einer Spannung U_DC in einem Zwischenkreis der Maschinen-Elektronik der Elektro-Werkzeugmaschine. Insbesondere erfolgt ein Wechsel 11 von der ersten Sub-Sequenz 1 zur zweiten Sub-Sequenz 2 dann, wenn die Bedingung U_DC > U_DC_max erfüllt ist, während ein Wechsel 12 von der zweiten Sub-Sequenz 2 zur ersten Sub-Sequenz 1 dann erfolgt, wenn die Bedingung U_DC < U_DC_min erfüllt ist. Mit anderen Worte können der Umschaltpunkt 11 zwischen der ersten Sub-Sequenz 1 und der zweiten Sub-Sequenz 2, sowie der Umschaltpunkt 12 zwischen der zweiten Sub-Sequenz 2 und der ersten Sub-Sequenz 1 in Abhängigkeit von der Zwischenkreisspannung U_DC der Elektro-Werkzeugmaschine festgelegt bzw. parametriert werden. Es ist im Sinne der Erfindung bevorzugt, dass ein erster Umschaltpunkt 11 zwischen der ersten Sub-Sequenz 1 und der zweiten Sub-Sequenz 2 dann erreicht ist, wenn U_DC > U_DC_max, während ein zweiter Umschaltpunkt 12 zwischen der zweiten Sub-Sequenz 2 und der ersten Sub-Sequenz 1 dann erreicht ist, wenn U_DC < U_DC_min.

Figur 2 zeigt eine schematische Darstellung einer bevorzugten Ausgestaltung des alternativen vorgeschlagenen Bremsverfahrens. Das alternative vorgeschlagene Verfahren zum Abbremsen eines rotierenden Werkzeugs einer Elektro-Werkzeugmaschine umfasst eine erste Sub-Sequenz 1 und eine zweite Sub-Sequenz 2, wobei ein Wechsel 11, 12 zwischen den Figur 1 zeigt eine schematische Darstellung einer bevorzugten Ausgestaltung des vorgeschlagenen Bremsverfahrens. Das vorgeschlagene Verfahren zum Abbremsen eines rotierenden Werkzeugs einer Elektro-Werkzeugmaschine umfasst eine erste Sub-Sequenz 1 und eine zweite Sub-Sequenz 2, wobei ein Wechsel 11, 12 zwischen den Sub-Sequenzen 1, 2 nach einem festgelegten Zeitschema erfolgt. Insbesondere werden den Sub-Sequenzen 1, 2 feste Zeitspannen t_brake und t_drive zugewiesen, nach deren Ablauf ein Wechsel 11, 12 erfolgt. Insbesondere erfolgt nach Ablauf der ersten Zeitspanne t_brake ein Wechsel 11 von der ersten Sub-Sequenz 1 in die zweite Sub-Sequenz 2, während nach Ablauf der zweiten Zeitspanne t_drive ein Wechsel 12 von der zweiten Sub-Sequenz 2 in die erste Sub-Sequenz 1 erfolgt.

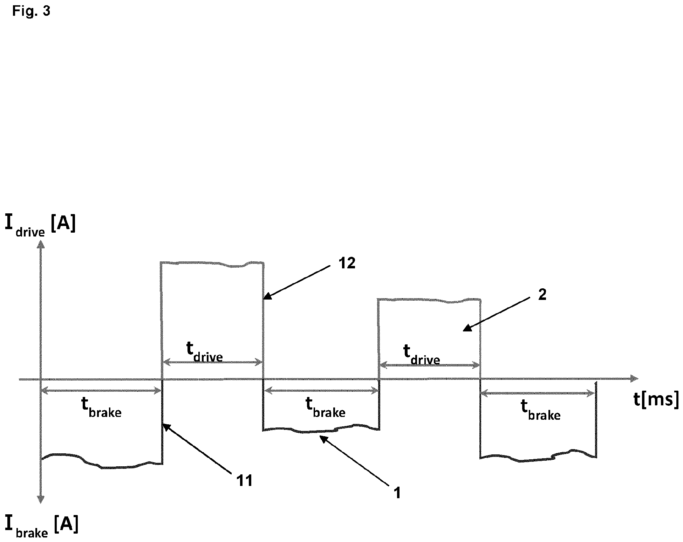

Es ist im Sinne der Erfindung bevorzugt, dass in der Elektro-Werkzeugmaschine Ströme fließen («Maschinen-Ströme»), die in Abhängigkeit der Zwischenkreis-Spannung U_DC der Maschinen-Elektronik bestimmt werden. Diese Maschinen-Ströme werden als I_brake bzw. I_drive bezeichnet, wobei der Strom I_brake der ersten Sub-Sequenz 1 zugeordnet ist und während der ersten Sub-Sequenz 1 fließt, während der Strom I_drive der zweiten Sub-Sequenz 2 zugeordnet ist und während der zweiten Sub-Sequenz 2 fließt. Ein möglicher Verlauf der Maschinen-Ströme I_brake und I_drive ist in Fig. 3 dargestellt.

Die Wechsel 11, 12 zwischen den Sub-Sequenzen 1, 2 können solange wiederholt werden, bis das rotierende Werkzeug der Elektro-Werkzeugmaschine zum Stillstand gekommen ist.

Ein beispielhafter Ablauf des alternativen vorgeschlagenen Bremsverfahrens ist in Fig. 3 dargestellt.

### Bezugszeichenliste

- 1: erste Sub-Sequenz
- 2: zweite Sub-Sequenz
- 3: Start des Abbremsvorgangs
- 11: Wechsel von der ersten zur zweiten Sub-Sequenz, erster Umschaltpunkt
- 12: Wechsel von der zweiten zur ersten Sub-Sequenz, zweiter Umschaltpunkt

## Patentansprüche

1. Verfahren zum Abbremsen eines rotierenden Werkzeugs einer Elektro-Werkzeugmaschine, wobei die Elektro-Werkzeugmaschine eine Maschinen-Elektronik und einen Motor umfasst,
**dadurch gekennzeichnet, dass**
der Abbremsvorgang eine erste Sub-Sequenz (1) und eine zweite Sub-Sequenz (2) umfasst, wobei während des Abbremsvorgangs zwischen den Sub-Sequenzen (1, 2) gewechselt wird und wobei Umschaltpunkte (11, 12) zwischen den Sub-Sequenzen (1, 2) in Abhängigkeit von einer Spannung in einem Zwischenkreis der Maschinen-Elektronik ausgewählt werden.

2. Verfahren zum Abbremsen eines rotierenden Werkzeugs einer Elektro-Werkzeugmaschine, wobei die Elektro-Werkzeugmaschine eine Maschinen-Elektronik und einen Motor umfasst,
**gekennzeichnet durch die folgenden Verfahrensschritte:**
a) Start (3) eines Abbremsvorgangs für das rotierende Werkzeug der Elektro-Werkmaschine in einer ersten Sub-Sequenz (1) des Abbremsvorgangs,
b) Ermittlung einer Spannung in einem Zwischenkreis der Maschinen-Elektronik,
c) Wechsel (11) in eine zweite Sub-Sequenz (2), wenn die Spannung in dem Zwischenkreis der Maschinen-Elektronik größer als eine maximale Trigger-Spannung U_DC_max ist,
d) Fortführung des Abbremsvorgangs in der zweiten Sub-Sequenz (2),
e) Wechsel (12) in die erste Sub-Sequenz (1), wenn die Spannung in dem Zwischenkreis der Maschinen-Elektronik kleiner als eine minimale Trigger-Spannung U_DC_min ist.

3. Verfahren nach Anspruch 1 oder 2
**dadurch gekennzeichnet, dass**
in der ersten Sub-Sequenz (1) des Abbremsvorgangs freiwerdende Bremsenergie in den Zwischenkreis zurückgespeist wird.

4. Verfahren nach einem der vorhergehenden Ansprüche
**dadurch gekennzeichnet, dass**
die Elektro-Werkzeugmaschine eine Schalteranordnung zur Leistungsansteuerung des Motors umfasst.

5. Verfahren nach Anspruch 4
**dadurch gekennzeichnet, dass**
die Schalteranordnung einen Motorinverter umfasst, wobei in der ersten Sub-Sequenz (1) des Abbremsvorgangs nur Low-Side-Schalter des Motorinverters aktiviert sind.

6. Verfahren einem der vorhergehenden Ansprüche
**dadurch gekennzeichnet, dass**
in der ersten Sub-Sequenz (1) des Abbremsvorgangs ein Lastzyklus in Abhängigkeit von einer Geschwindigkeit des rotierenden Werkzeugs der Elektro-Werkzeugmaschine und/oder in Abhängigkeit von einem Bremsstroms des Motors der Elektro-Werkzeugmaschine ermittelt wird.

7. Verfahren nach einem der vorhergehenden Ansprüche
**dadurch gekennzeichnet, dass**
in der zweiten Sub-Sequenz (2) des Abbremsvorgangs des Motors der Elektro-Werkzeugmaschine angetrieben wird.

8. Verfahren nach einem der Ansprüche 4 bis 7
**dadurch gekennzeichnet, dass**
in der zweiten Sub-Sequenz (2) des Abbremsvorgangs alle Schaltelemente der Schalteranordnung der Elektro-Werkzeugmaschine aktiviert sind.

9. Alternatives Verfahren zum Abbremsen eines rotierenden Werkzeugs einer Elektro-Werkzeugmaschine, wobei die Elektro-Werkzeugmaschine eine Maschinen-Elektronik und einen Motor umfasst,
**dadurch gekennzeichnet, dass**
der Abbremsvorgang eine erste Sub-Sequenz (1) und eine zweite Sub-Sequenz (2) umfasst, wobei der ersten Sub-Sequenz (1) eine erste Zeitspanne t_brake und der zweiten Sub-Sequenz (2) eine zweite Zeitspanne t_drive zugeordnet wird, wobei nach deren Ablauf zwischen den Sub-Sequenzen (1, 2) gewechselt wird, wodurch Umschaltpunkte (11, 12) zwischen den Sub-Sequenzen (1, 2) festgelegt werden, wobei Maschinen-Stromwerte I_brake und I_drive in Abhängigkeit von einer Spannung in einem Zwischenkreis der Maschinen-Elektronik bestimmt werden.

10. Alternatives Verfahren zum Abbremsen eines rotierenden Werkzeugs einer Elektro-Werkzeugmaschine, wobei die Elektro-Werkzeugmaschine eine Maschinen-Elektronik und einen Motor umfasst,
**gekennzeichnet durch die folgenden Verfahrensschritte:**
a) Start (3) eines Abbremsvorgangs für das rotierende Werkzeug der Elektro-Werkmaschine in einer ersten Sub-Sequenz (1) des Abbremsvorgangs, wobei der ersten Sub-Sequenz (1) eine erste Zeitspanne t_brake zugeordnet wird, wobei während des Abbremsvorgangs Maschinen-Stromwerte I_brake in Abhängigkeit von einer Spannung in einem Zwischenkreis der Maschinen-Elektronik bestimmt werden,
b) Wechsel (11) in eine zweite Sub-Sequenz (2) nach Ablauf der ersten Zeitspanne t_brake,
c) Fortführung des Abbremsvorgangs in der zweiten Sub-Sequenz (2) für eine zweite Zeitspanne t_drive, wobei während der zweiten Sub-Sequenz die Maschinen-Stromwerte I_drive in Abhängigkeit von einer Spannung in einem Zwischenkreis der Maschinen-Elektronik bestimmt werden,
d) Wechsel (12) in die erste Sub-Sequenz (1) nach Ablauf der ersten Zeitspanne t_drive.

11. Verfahren nach Anspruch 9 oder 10
**dadurch gekennzeichnet, dass**
das rotierende Werkzeug der Elektro-Werkzeugmaschine durch eine Regelung und/oder Limitierung der Maschinen-Stromwerte I_brake und I_drive abgebremst wird.

12. Elektro-Werkzeugmaschine zur Durchführung eines der Bremsverfahren nach den vorhergehenden Ansprüchen.

13. Elektro-Werkzeugmaschine nach Anspruch 12
**dadurch gekennzeichnet, dass**
die Elektro-Werkzeugmaschine ein Elektro-Schleifgerät ist.

14. Elektro-Werkzeugmaschine nach Anspruch 12 oder 13
**dadurch gekennzeichnet, dass**
die Elektro-Werkzeugmaschine eine Schalteranordnung zur Leistungsansteuerung des Motors umfasst.

15. Elektro-Werkzeugmaschine nach Anspruch 14
**dadurch gekennzeichnet, dass**
die Schalteranordnung einen Motorinverter umfasst.
